# EUROPEAN PATENT APPLICATION

(11) **EP 2 186 424 A1**
(43) Date of publication of application: **19.05.2010**
(21) Application number: 08169033.1
(22) Date of filing: 13.11.2008
(51) Int. Cl.: A23L 1/221, A23L 1/30

(54) **Process for preparing a natural extract**

(71) Applicant: Unilever N.V., 3013 AL Rotterdam (NL)
(72) Inventor: Plieninger, Annette Katharina, 74074 Heilbronn (DE)
(74) Representative: Tjon, Hon Kong Guno

(57) **Abstract**

A process for preparing a neutral tasting elderflower extract which can be used for many food applications.

## Description

The present invention relates to a process for preparing a natural extract, in particular a elderflower extract.

DE 298 11 153 discloses a process for preparing an elderflower syrup by contacting 30 elderflowers with 3 L of water for 24 hrs, sieving this through a cloth, and heating the water with 3 kg of sugar, 90 g of citric acid and the juice of 2 lemons.

EP 1 281 326 discloses a process to prepare an elderflower drink comprising elderflower pollen by heating elder flower at a temperature of 82 to 85 degrees C in a solution of 30 L mineral water, 8 kg of sugar, 6 L of lemon juice and peel and juice of 3 oranges and lemons.

A problem with this prior art is that the flavour profile of this extract is not sufficiently neutral for many food applications. Surprisingly, one embodiment of the present invention provides a process that results in a neutral tasting extract, whereby a concentrated fruit juice, like concentrated apple juice, is used as extraction medium.

### Summary of the invention

A process is provided for preparing a natural extract comprising the steps of
a) providing a fruit juice concentrate having at least 15 Brix, preferably at least 18, most preferably at least 20 and preferably at most 50 Brix, more preferably at most 45 Brix, more preferably at most 40 Brix.
b) mixing said fruit juice concentrate with elder flowers, preferably at a temperature of 65 to 80 degrees Celsius, preferably for at least 1 to 3 hrs.
c) separate the elder flowers from the fruit juice concentrate to form the flower extract.
d) optionally, pasteurising or sterilising the flower extract.

### Detailed description of the invention

Elder flowers are preferably used directly after harvesting or at most 12 hours, or more preferably at most 8 hours after harvesting. Another option is to use frozen elder flowers. If other flowers are used in combination with or instead of elderflowers, the same preferences apply.

Preferably, the extraction process uses a fruit juice concentrate of at least 15 degrees Brix. The term "Brix value" which is considered to be synonymous to the term Degrees Brix (symbol °Bx) is a measurement of the amount of dry matter. It is a measure of the percent total soluble solids in a given weight of plant juice, which includes the summation of sucrose glucose, fructose, vitamins, amino acids, protein, hormones and any other soluble solids. It is often expressed as the percentage of sucrose. It is measured with a saccharimeter that measures specific gravity of a liquid or more easily with a refractometer or a Brix hydrometer. Degrees Brix is conventionally used as a measure of concentration. Fresh fruit juice typically has a Brix value of 10. Although, concentrated fruit juice can be readily ordered from fruit juice suppliers is different concentrations, i.e. in different degrees Brix levels, it is often sold at 70 degrees Brix. Obviously a fruit concentrate of 70 degrees Brix may be diluted to any desired degrees Brix by adding an appropriate amount of water.

The pH of the fruit juice concentrate is usually less than 4.5. This may be achieved by the addition of an edible acid like citric acid or lemon juice.

Although, apple juice concentrate is a preferred juice concentrate other juice concentrates may also be used such as, grape juice concentrate, peach juice concentrate, pear juice concentrate and any mixtures of the fore mentioned juices.

The fruit juice concentrate may be contacted with elder flowers at any temperature for any period of time sufficient to extract enough elderflower flavour into the extract. Temperatures above 100 degrees C are usually avoided as this influences the flavour profile negatively. When higher temperatures are used, the contact time may be lowered. Preferably the fruit juice concentrate may be contacted with elder flowers at a temperature of 65 to 80 degrees Celsius, preferably for at least 1 to 3 hrs. Subsequently, the elder flowers are separated from the fruit juice concentrate to form the elder flower extract. Separation may be carried out by any means know in the art such as sieving. The obtained elder flower extract may also be concentrated is so desired. Any concentration method known in the art may be used including evaporation, using moderate heat, microwave, vacuum or any combination thereof. Optionally, the elder flower extract may be pasteurised or sterilised before further use. Although, the invention has been described for elderflowers it may also be used for a combination of elderflowers and other flowers. In fact, instead of an elder flower extract, another flower extract may be prepared, for example a hibiscus extract by using hibiscus instead of elderflowers. Other flowers include rose, hibiscus, violet, lavender may be used.

Thus, according another embodiment of the invention a flower extract is provided obtained by the process as described above. The flower extract is surprisingly effective as it can be used in a wide variety of food compositions without the need to add extra sugar. The amount of flower extract provided will depend on the exact food composition and the desired taste. Thus, according yet another embodiment of the invention, a food composition is provided comprising from 0.1 to 90 wt%, preferably from 1 to 30 wt%, more preferably from 2 to 15 wt% of a flower extract obtained by a process as described above. Such food composition may be prepared by simply adding the flower extract obtained by a process as described above.

Different embodiments of the invention may be carried out in using preferred or more preferred conditions (e.g. Brix) or ingredients. Preferred ranges will often be described in the following format: preferably at least x1, more preferably at least x2, even more preferably x3, preferably at most y1, more preferably at most y2, even more preferably y3, whereby x1 <x2<x3<y3<y2<y1. This format is meant to include the preferred ranges x1 to y1, more preferably x2 to y2 and even more preferably x3 to y3 whereby the endpoints are included and also all subranges subsumed therein (e.g. x1 to y3 and x3 to y1).

Other than in the examples, or where otherwise indicated, all numbers expressing quantities of ingredients or reaction conditions used herein are to be understood as modified in all instances by the term "about". Similarly, all percentages are weight/weight percentages of the total composition unless otherwise indicated. Where the term "comprising" is used in the specification or claims, it is not intended to exclude any terms, steps or features not specifically recited.

The invention is more fully illustrated by the following non-limiting examples showing some preferred embodiments of the invention.

### Examples

### Example 1.

Apple juice concentrate of 70 Brix is diluted with water to obtain an apple juice concentrate of 25 Brix. A jar is filled with elderflower (without the green parts) and the jar is filled with sufficient juice concentrate of 25 Brix to cover the elderflowers. The jar is left to stand at 25 degrees C for about 14 hrs. The elderflowers are sieved to obtain the elderflower abstract.

### Example 2.

Another extract is prepared as described in Example 1 except that that the jar with elderflowers and apple juice is left to stand at 70 degrees C for about 1 to 3 hours.

The elderflower extract according to the invention has a neutral taste (as neutral as the apple juice) and can be added to many food compositions without the need of adding extra sugar to the food composition.

## Claims

1. A process for preparing a flower extract comprising the steps of
a) providing a fruit juice concentrate having at least 15 Brix, preferably at least 18, most preferably at least 20 and preferably at most 50 Brix, more preferably at most 45 Brix, more preferably at most 40 Brix.
b) mixing said fruit juice concentrate with elder flowers, preferably at a temperature of 65 to 80 degrees Celsius, preferably for at least 1 to 3 hrs.
c) separate the elder flowers from the fruit juice concentrate to form the flower extract.
d) optionally, pasteurising or sterilising the flower extract.

2. A process according to claim 1 wherein the pH of the fruit juice concentrate is less than 4.5.

3. A process according to claim 1 or 2 wherein the fruit juice concentrate is selected from apple juice concentrate, grape juice concentrate, peach juice concentrate, pear juice concentrate and mixtures thereof.

4. A process according to according to any one of the preceding claims wherein another flower in addition to elder flower is used.

5. A process according to according to any one of the preceding claims wherein another flower than elder flower is used.

6. A process according to according to any one of the preceding claims, wherein the flower extract is concentrated by evaporation before the optional step of pasteurising or sterilising the flower extract.

7. A process according to claim 1 wherein the fruit juice concentrate is apple juice concentrate.

8. A flower extract obtainable by a process according to any one of the preceding claims.

9. A process to prepare a food composition comprising the step of adding a flower extract obtained by a process according to any one of the preceding claims 1 to 7.

10. A food composition comprising from 0.1 to 90 wt%, preferably from 1 to 30 wt%, more preferably from 2 to 15 wt% of a flower extract obtained by a process according to any one of the preceding claims 1 to 7, by weight of the total food composition.
